# EUROPEAN PATENT SPECIFICATION

(11) **EP 0 521 840 B1**
(45) Date of publication and mention of the grant of the patent: **09.08.1995**
(21) Application number: 92850156.8
(22) Date of filing: 24.06.1992
(51) Int. Cl.: H02K 7/102, F16D 59/02

(54) **Electric motor with a brake operated by electromagnetic means**
Elektrischer Motor mit einer von elektromagnetischen Mitteln betätigten Bremse
Moteur électrique avec un frein à fonctionnement par moyens électromagnétiques

(30) Priority: 02.07.1991 SE 9102066
(43) Date of publication of application: 07.01.1993
(73) Proprietor: FHP ELMOTOR AKTIEBOLAG, S-590 90 Ankarsrum (SE)
(72) Inventor: Pettersson, Mats Hakan, S-593 52 Västervik (SE)
(74) Representative: Svahn, Göran

(56) References cited:
- FR-A- 2 345 843
- GB-A- 2 044 867
- US-A- 4 838 391

## Description

The present invention relates to an electric motor having a brake which is operable by electromagnetic action, according to the preamble of the appending claim 1. A motor of the type referred to comprises a rotatable shaft on which a brake disc is secured. The disc cooperates with a braking surface fixedly associated with the motor and formed on a cup-shaped part which in turn forms one half of a housing the other half of which being a bottom part cooperating with the cup-shaped part to enclose a magnet coil. Under the action of spring means, said cup-shaped part is movable in the direction of the motor shaft to bring the braking surface into contact with the brake disc. Moreover, the cup-shaped part can be operated in the opposite direction under the action of the magnetic force generated by the magnet coil when the motor is operating.

A motor of the kind referred to can be used in connection with lawn mowers, for example, where it is important that the motor can be stopped, essentially immediately, should, suddenly, the person using the lawn mower loose control of said mower. In a prior art lawn mower, equipped with a motor with a brake, the brake action occurs between two braking surfaces when they are moved axially towards each other.

In order to increase the brake action and to decrease the braking time an arrangement is suggested in which the braking surfaces have a conical shape. Such an arrangement is disclosed in DE-A-29 34 396 wherein a conical brake disc cooperates with a braking surface which is fixedly disposed and has a corresponding shape. A similar arrangement is shown also in SU-A-1056374. However, both said prior art embodiments are intended for use with motors constructed to act on heavy loads. Accordingly, in these publications there are no obvious teachings on how to arrange in an embodiment having a very light load, in the form of a rotating cutting blade, in order to very rapidly stop the motor, and the cutting blade, in case something should go wrong rising a risk of an accident to occur. In the lawn mower application it is additionally advantageous if the cutting blade is always kept locked by the brake when the lawn mower is not in use and, accordingly, the motor is off.

It is a first object of the invention to provide a brake which, in making use of conical brake surfaces, has a very short braking time and at the same time has a self-locking effect which causes the cutting blade to always be locked when the motor is not in operation.

A second object of the invention is to provide, in a new and efficient manner, the spring force which is effective to operate one of the braking parts towards the other of said parts when braking is to be effected.

The first-mentioned object is achieved in a motor having a brake and being of a design according to the preamble of claim 1 and, in addition, having been given the characteristic features indicated in said claim. The second object is achieved in an embodiment according to claim 4 and a strengthening of the brake force is obtained at the same time as said force is distributed more evenly along the periphery of the annular braking surfaces.

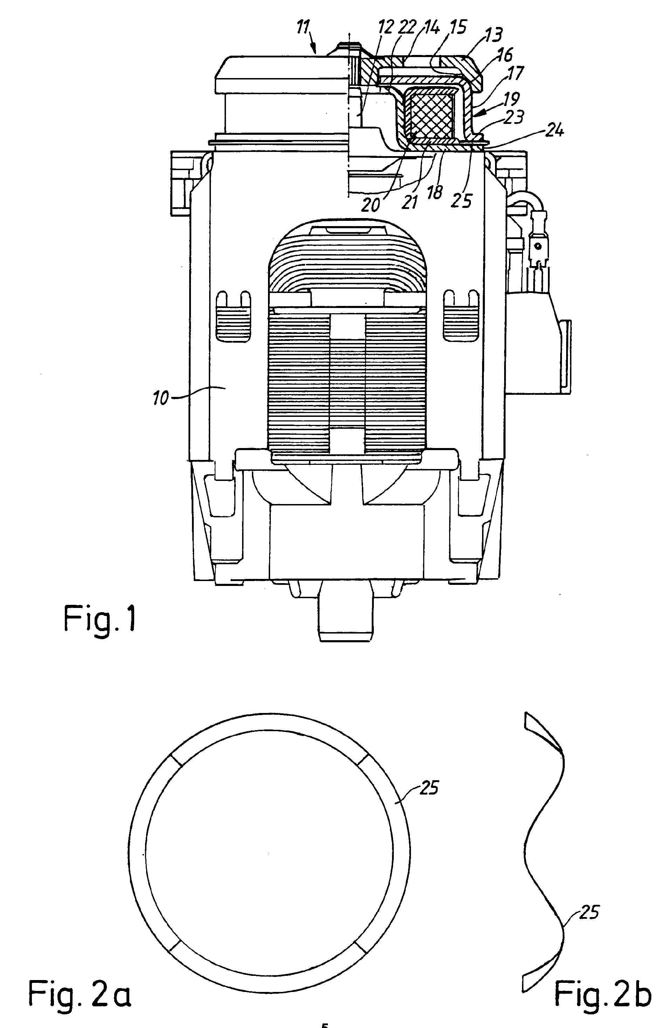

The invention shall now be described more in detail in connection with an embodiment and with reference to the accompanying drawings. In said drawings Fig. 1 shows, schematically, a motor 10 with a built-on brake, generally designated by 11. The motor has a rotatable rotor shaft 12, on one end of which a brake disc 13 is secured. The motor can be of any suitable design and in the example a series motor has been chosen. The motor type is assumed to be known and will not be described in detail. The brake disc is provided with holes 14 for cooling purposes and, in addition, the brake disc has an inner peripheral surface 15 of a conical shape.

The inner peripheral surface 15 on the brake disc cooperates with a braking surface 16 disposed on a cup-shaped part 17 which together with a bottom part 18 forms a housing 19. The housing encloses a magnet coil 20 wound on a core 21. The bottom part has a central, raised part 22 serving as a guide for the magnet coil on the bottom part. The cup-shaped part 17 has a peripheral edge 23 which extends horizontally at a distance from a likewise horizontal edge 24 on the bottom part 18. In the space between the two horizontal edges an annular spring or a spring washer 25 is inserted which forces the cup-shaped part in the direction away from the bottom part and towards the brake disc so that the cup-shaped part engages with the inner peripheral surface on the brake disc.

The cup-shaped part 17 is made of magnetic steel while the brake disc is made from a material which is elastic to cause the desired self-locking effect. In the example a thermoset plastics material has been chosen. It has appeared that, in addition to the fact that said desired effect is achieved, the material is resistant to wear and can be expected to have a life coinciding with the life of the motor.

As indicated, the inner peripheral edge 15 on the brake disc has a conical shape and the edge cooperates with a surface which is rounded and which connects the upper part of the cup-shaped part with the vertical annular side part of same. The rounded surface, referred to above as the braking surface 16, initially has a shape which is not conical but can be expected to assume a somewhat conical shape after a long period of operation.

The spring washer 25 has a form so as to look like being wave-shaped when seen in the direction of the periphery. This is particularly apparent from Fig. 2b, showing the spring i a side view. In Fig. 2a the spring is shown in a top view. As the spring acts along the periphery of the cup-shaped part 17, mainly straight under the two cooperating brake surfaces, the brake force caused by the spring will be evenly distributed along the periphery so as to result in the best possible brake effect to be achieved. This should be compared to prior art embodiments wherein the brake force is produced by means of a number of coiled springs disposed along the periphery or even in the center, far away from the braking surfaces.

Another advantage with the embodiment including the spring washer is that the magnetic coupling between the cup-shaped part 17 and the bottom part 18 becomes better than in embodiments with distributed coiled springs, whereby, when the motor is started, the cup-shaped part will very rapidly be moved away from its engagement with the brake disc.

## Claims

1. Electric motor provided with a brake being operable by electromagnetic action, said motor (10) comprising a rotatable shaft (12) on which is secured a brake disc (13) which cooperates with a braking surface (16) associated with the motor and formed on a cup-shaped part (17) forming one half of a housing (19) the other half of which being constituted by a bottom part (18) which with the cup-shaped part encloses a magnet coil (20), said cup-shaped part (17) being movable in the direction of the motor shaft by the action of spring means (25) in order to bring the braking surface (16) into contact with the brake disc (13), said cup-shaped part (17) further being influenced in the opposite direction by the magnetic force caused by the magnetic coil when the motor is in operation, **characterized in that** the braking surface (16) is constituted by a rounded edge interconnecting the upper and side surfaces, respectively, of said cup-shaped part (17), the brake disc (13) having a conical edgepart (15) which cooperates with the braking surface (16) and, further, being made of a material which is elastic, to a certain extent, in order to cause a desired self-locking effect.

2. Motor according to claim 1, **characterized in that** the brake disc (13) is made of a thermoset plastics material.

3. Motor according claim 1, **characterized in that** the bottom part (18) of the housing (19) enclosing the magnetic coil (20) has an edge part (24) which is directed perpendicularly to the motor shaft (12), said edge part (24) being positioned straight opposite to a corresponding edge part (23) disposed on the cup-shaped part (17) of said housing, the spring means (25) consisting of an annular spring washer disposed between the two edge parts.

4. Motor according to claim 3, **characterized in that** the spring washer (25) is wave-shaped along its periphery.

## Patentansprüche

1. Elektromotor mit einer Bremse, die durch elektromagnetische Wirkung betätigbar ist, wobei der Motor (10) eine drehbare Welle (12) aufweist, an der eine Bremsscheibe (13) befestigt ist, die mit einer Bremsfläche (16) zusammenwirkt, die dem Motor zugeordnet ist und auf einem tassenförmigen Teil (17) ausgebildet ist, das eine Hälfte eines Gehäuses (19) bildet, dessen andere Hälfte durch ein unteres Teil (18) gebildet ist, mit dem das tassenförmige Teil eine Magnetspule (20) umschließt, wobei das tassenförmige Teil (17) durch die Wirkung von Federmitteln (25) in der Richtung der Motorwelle bewegbar ist, um die Bremsfläche (16) mit der Bremsscheibe (13) in Kontakt zu bringen, wobei das tassenförmige Teil (17) weiterhin in der entgegengesetzten Richtung durch die Magnetkraft beeinflußt wird, die durch die Magnetspule bewirkt wird, wenn der Motor in Betrieb ist, dadurch gekennzeichnet, daß die Bremsfläche (16) aus einem abgerundeten Rand besteht, der die oberen bzw. Seitenflächen des tassenförmigen Teils (17) verbindet, wobei die Bremsscheibe (13) einen konischen Randteil (15) aufweist, der mit der Bremsfläche (16) zusammenarbeitet und weiterhin aus einem Material hergestellt ist, das in einem gewissen Ausmaß elastisch ist, um eine gewünschte selbstblockierende Wirkung zu bewirken.

2. Motor nach Anspruch 1, dadurch gekennzeichnet, daß die Bremsscheibe (13) aus einem wärmegehärteten Kunststoffmaterial hergestellt ist.

3. Motor nach Anspruch 1, dadurch gekennzeichnet, daß das untere Teil (18) des Gehäuses (19), das die Magnetspule (20) umschließt, einen Randteil (24) aufweist, der rechtwinklig zu der Motorwelle (12) ausgerichtet ist, wobei der Randteil (24) direkt gegenüber einem entsprechenden Randteil (23) angeordnet ist, der auf dem tassenförmigen Teil (17) des Gehäuses angeordnet ist, wobei das Federmittel (25) aus einer ringförmigen Federscheibe besteht, die zwischen den beiden Randteilen angeordnet ist.

4. Motor nach Anspruch 3, dadurch gekennzeichnet, daß die Federscheibe (25) entlang ihres Umfangs wellenförmig ist.

## Revendications

1. Moteur électrique muni d'un frein actionnable par effet électromagnétique, ledit moteur (10) comprenant un arbre rotatif (12) sur lequel est calé un disque de freinage (13) qui coopère avec une surface de freinage (16), associée au moteur et ménagée sur une partie (17) en forme de cuvette, matérialisant l'une des moitiés d'un boîtier (19) dont l'autre moitié est constituée d'une partie inférieure (18), avec laquelle la partie en forme de cuvette emprisonne une bobine magnétique (20), ladite partie (17) en forme de cuvette étant mobile en direction de l'arbre du moteur, sous l'action d'un moyen élastique (25), de manière à amener la surface de freinage (16) au contact du disque de freinage (13), ladite partie (17) en forme de cuvette étant par ailleurs influencée, dans la direction opposée, par la force magnétique engendrée par la bobine magnétique au cours du fonctionnement du moteur, caractérisé par le fait que la surface de freinage (16) se présente comme un bord arrondi reliant respectivement, l'une à l'autre, les surfaces supérieure et latérale de ladite partie (17) en forme de cuvette, le disque de freinage (13) comportant une région marginale tronconique (15) qui coopère avec la surface de freinage (16) et étant constitué, en outre, d'un matériau doué d'élasticité dans une certaine mesure, afin d'exercer un effet d'autoverrouillage souhaité.

2. Moteur selon la revendication 1, caractérisé par le fait que le disque de freinage (13) est constitué d'une matière plastique thermodurcissable.

3. Moteur selon la revendication 1, caractérisé par le fait que la partie inférieure (18) du boîtier (19), renfermant la bobine magnétique (20), présente une région marginale (24) qui est orientée perpendiculairement à l'arbre (12) du moteur, ladite région marginale (24) étant directement située en vis-à-vis d'une région marginale correspondante (23), disposée sur la partie (17) en forme de cuvette dudit boîtier, le moyen élastique (25) consistant en une rondelle élastique annulaire, interposée entre les deux régions marginales.

4. Moteur selon la revendication 3, caractérisé par le fait que la rondelle élastique (25) est de configuration ondulée le long de sa périphérie.
